# EUROPÄISCHE PATENTANMELDUNG

(11) **EP 1 029 645 A1**
(43) Veröffentlichungstag der Anmeldung: **23.08.2000**
(21) Anmeldenummer: 00102805.9
(22) Anmeldetag: 11.02.2000
(51) Int. Cl.: B29C 45/16, B29L 22/00

(54) **Mehrschichtiger Vorformling sowie Verfahren zu dessen Herstellung**

(30) Priorität: 20.02.1999 DE 19907387
(71) Anmelder: Hehl, Karl, 72290 Lossburg (DE)
(72) Erfinder: Hehl, Karl, 72290 Lossburg (DE)
(74) Vertreter: Reinhardt, Harry

(57) **Zusammenfassung**

Ein aus mehreren Werkstoffen bestehender hohler Kunststoffartikel besitzt eine Wandung, in der die Werkstoffe über ihre Kontaktfläche miteinander verbunden sind. Am unteren geschlossenen Ende (10b) des Kunststoffartikels (10) befinden sich Angüsse (51,52,53). Dadurch, daß das untere Ende (10b) trotz der Angüsse innerhalb der Wandstärke x amorph ist, wird eine homogene Struktur des Kunststoffartikels erzielt.

Dies kann bewerkstelligt werden durch Spritzgießen in mehreren Schritten in Formhohlräume, wobei vorzugsweise mit offener Verschlußdüse eingespritzt wird oder beim Einspritzen des ersten Werkstoffs ein langer Angußzapfen erzeugt wird, um das geschlossene untere Ende (10b) amorph zu halten bzw. eventuelle kristalline Bereiche außerhalb der Wandstärke zu halten.

## Beschreibung

### Gebiet der Erfindung

Die Erfindung betrifft einen aus mehreren Werkstoffen bestehenden hohlen Kunststoffartikel zur Herstellung von Kunststoffhohlkörpern durch Verstrecken nach dem Oberbegriff des Anspruches 1, der vorzugsweise auf einer Spritzgießmaschine zur Verarbeitung von Kunststoffen und anderer plastifizierbarer Massen hergestellt ist, sowie Verfahren zu dessen Herstellung gemäß dem Oberbegriff der Ansprüche 6 und 12.

### Stand der Technik

Zur Herstellung von derartigen hohlen Kunststoffartikeln, die üblicherweise Vorformlinge genannt werden und später zu Kunststoffhohlkörpern biaxial verstreckt werden können, werden vorzugsweise verschiedene Werkstoffe mit verschiedenen Eigenschaften eingesetzt. Diese Werkstoffe können verschiedene PET-Typen, aber auch andere Materialien wie PEN, Polycarbonate oder Barrierematerialien, wie z.B. Nylon MXD6, PAN, LCP, PEN, EVAL (EVOH) usw. sein, die in den Vorformlingen in einer Mehrkomponententechnik so aneinandergefügt werden, daß ihre jeweiligen Vorteile zum Tragen kommen. Die verschiedenen Materialien haben z.B. unterschiedliche Barriereeigenschaften, thermische Stabilität, Neigung zur Rißbildung durch Alterung (Streß-Cracking) oder können und zum Teil auch müssen durch Neuware bzw. Recyclingmaterial gebildet werden. Insofern bestimmen die unterschiedlichen Belastungsbereiche bei der Herstellung sowie beim Gebrauch als auch behördliche Bestimmungen den Einsatz der jeweiligen Materialien. Während das Mehrweggewinde beim anschließenden Verstrecken keine Verbesserung seiner Eigenschaften erfährt, da es amorph bleibt, werden die Eigenschaften des Flaschenkörpers durch das Verstrecken verbessert. Eine Anwendungsgrenze sind die Barriereeigenschaften. Ferner darf im Getränkebereich Recyclingmaterial derzeit nicht mit dem Füllgut in Kontakt kommen. Verlangt wird eine Mindestschichtdicke an Neuware zwischen Recyclingmaterial und Füllgut.

Der Flaschenboden bleibt beim Blasformen ebenfalls größtenteils amorph, so daß hier das gleiche gilt wie für das Gewinde. Ferner ist dieser Bereich besonders dem Stresscracking unterworfen. Unter Druck und saurem bzw. alkalischem Einfluß ergibt sich hier eine schnelle Alterung, was durch UV-Licht noch verstärkt wird. Gerade im Angußbereich, der üblicherweise am Flaschenboden liegt, kann es jedoch am Ende des Angusses auch zu kristallinem Material kommen. Der Angußbereich muß daher so gestaltet werden, daß dieses kristalline Material keine Probleme beim Verstrecken bereitet, da er unter Druckbelastung der Flaschen Auslöser für ein Platzen der Flaschen sein kann. Das Barrierematerial, das im gleichen Angußbereich ebenfalls angespritzt wird, darf nicht an die Außenseite des Kunststoffartikels kommen. Das Barrierematerial muß daher vom Material der anderen Einspritzvorgänge komplett eingeschlossen werden. Ansonsten kann Feuchtigkeit eindringen und die Schichten delaminieren.

Zur Lösung des Problems der Mischung von amorphen Teilbereichen mit kristallinen Teilbereichen des Vorformlings aufgrund seiner Herstellung wurde in der WO-A 98/46410 bereits vorgeschlagen, bei der Herstellung eines derartigen Kunststoffartikels verschiedene Teilbereiche in der Formwandung eines mehrschichtigen Kunststoffartikels zu beheizen oder zu kühlen, um dadurch gezielt kristalline oder amorphe Bereiche im Vorformling hervorzurufen. Abgesehen von dem dafür erforderlichen Aufwand, hat der dortige Vorschlag keinen Einfluß auf den Angußbereich, der insofern vernachlässigt wurde.

Aus der älteren deutschen Patentanmeldung 198 56 356.6 ist es bekannt, die verschiedenen Schichten Schicht für Schicht in einer Form in exakt definierten Formhohlräumen aufzubauen.

### Zusammenfassung der Erfindung

Ausgehend von diesem Stand der Technik liegt der vorliegenden Erfindung die Aufgabe zugrunde, den Angußbereich homogen auszugestalten.

Diese Aufgabe wird durch einen Kunststoffartikel mit den Merkmalen des Anspruches 1 gelöst, der mit einem Verfahren mit den Merkmalen der Ansprüche 5 oder 9 hergestellt werden kann.

Der Angußbereich wird so gestaltet, daß kein kristallines Material in der Wand des Kunststoffartikels selbst zu liegen kommt. Dadurch ergibt sich im verbleibenden Bereich ein homogener Werkstoff, so daß es unter Druckbelastung und beim Verstrecken zu weniger Ausschuß kommt, da der kristalline Bereich - sofern überhaupt vorhanden nicht mehr Einfluß auf den zu verstreckenden Bereich hat. Durch eine geschickte Geometriewahl wird damit der kristalline Bereich aus dem Wandbereich des Bodens des Kunststoffartikels nach außen verlegt.

Nach den Ansprüchen 2 und 3 wird bei der Geometriewahl gleichzeitig darauf geachtet, daß der Angußpunkt nicht wesentlich größer ist als die bisher bekannten Angüsse, da weiterhin auch mit den selben Blasformmaschinen bzw. Blasformen gearbeitet werden soll. Hierbei ist es z.B. auch gemäß Anspruch 3 möglich, das Barrierematerial im Boden nicht durchgängig über den Anguß zu führen, da dort genügend Material vorhanden ist, das der geforderten Durchlässigkeit Widerstand entgegenbringt. Hintergrund ist hier vor allem aber, daß das Barrierematerial nicht an die Außenseite des Kunststoffartikels kommen kann, um einen Eintritt von Feuchtigkeit zwischen die Schichten zu vermeiden.

Die Verfahren nach den Ansprüchen 5 oder 9 erlauben in Verbindung mit der Herstellung des Kunststoffartikels in klar definierten Formhohlräumen einer Kunststoff-Spritzgießmaschine, daß entweder kein kristalliner Bereich entsteht oder das kristalline Material gezielt außerhalb der Wandung zu liegen kommt, wobei Lösungen vorgeschlagen werden, die es erlauben, Anspritzpunkte ohne Kristallinität im Bereich der Wandung herzustellen. So wird beim Spritzgießen entweder durch Herstellung der einzelnen Schichten ohne Verschlußnadel ein kleinerer, aufgrund des schnelleren Abkühlens amorph bleibender Anguß erzeugt, oder es wird mit einem langen Angußzapfen gearbeitet. Die geschlossene Kontur im Formhohlraum ermöglicht dabei eine exakte Positionierung im Gegensatz zum vorbekannten Sandwich-Verfahren, bei dem die verschiedenen Materialien noch in die warme Seele des zuvor eingespritzten Werkstoffes gebracht werden.

### Kurzbeschreibung der Figuren

Im folgenden wird die Erfindung anhand der beigefügten Figuren an Ausführungsbeispielen erläutert. Es zeigen:
- Fig. 1: Einen Schnitt durch einen nach dem Verfahren hergestellten Kunststoffartikel,
- Fig. 2-4: die schematische Herstellung eines Kunststoffartikels gemäß Fig. 1 durch Spritzgießen,
- Fig. 5,6: Schnitte durch den Bodenbereich eines Kunststoffartikels,
- Fig. 7-9: die schematische Herstellung eines Kunststoffartikels gemäß Fig. 6 durch ein in mehreren Schritten erfolgendes Spritzgießen,
- Fig. 10: eine Darstellung gemäß Fig. 1 eines Kunststoffartikels in einer weiteren Ausführungsform.

### Beschreibung bevorzugter Ausführungsbeispiele

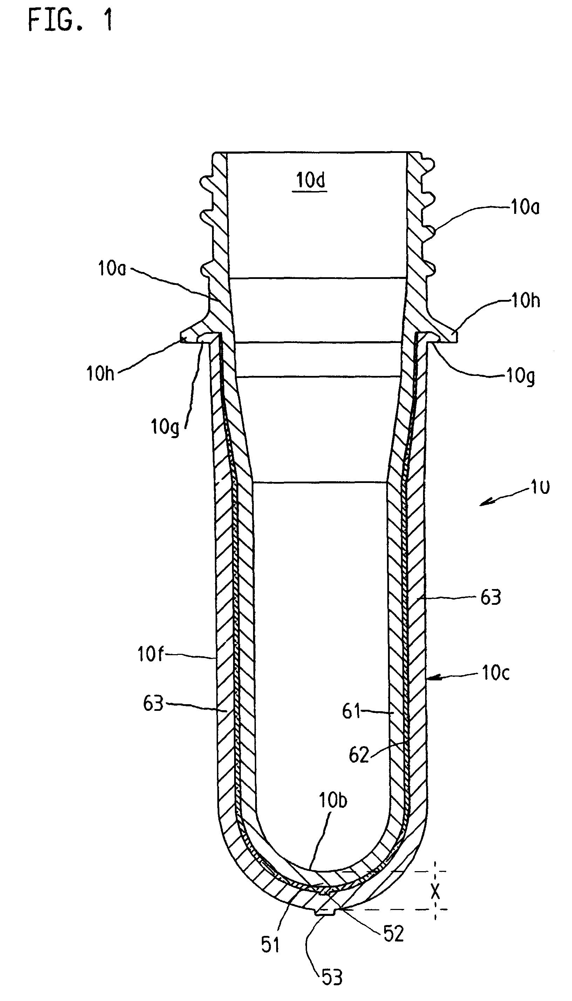

Figur 1 zeigt einen aus mehreren Werkstoffen bestehenden, hohlen Kunststoffartikel 10. Diese Kunststoffartikel werden auch als Vorformlinge bezeichnet und dienen meist zur Herstellung von Kunststoffhohlkörpern durch biaxiales Verstrecken dieses Vorformlings. Der Kunststoffartikel 10 besitzt eine Wandung 10c, in der die Werkstoffe miteinander über ihre Kontaktflächen verbunden sind. Im Ausführungsbeispiel sind die Werkstoffe in der Wandung schichtweise aufgebaut, wobei z.B. die Schicht 61 Neuware ist, Schicht 62 eine Barriereschicht darstellt und die Schicht 63 z.B. durch Recyclingmaterial gebildet werden kann, da diese Schicht nicht mit dem Füllgut in Berührung kommt.

Der Kunststoffartikel besitzt ein oberes offenes Ende 10d, an dem ein Gewindebereich 10a und ein Neckring 10h vorgesehen ist. Der Neckring besitzt im Übergang zum Zwischenbereich 10f eine Ausnehmung 109, in der die Barriereschicht 62 definitiv im Hinblick auf ihre Erstreckung nach oben endet. Dies ist durch das Einspritzen in klar definierte Formhohlräume eindeutig bestimmbar. Sie wird dort mit ausreichendem Abstand nach außen von der äußersten Schicht 63 überdeckt.

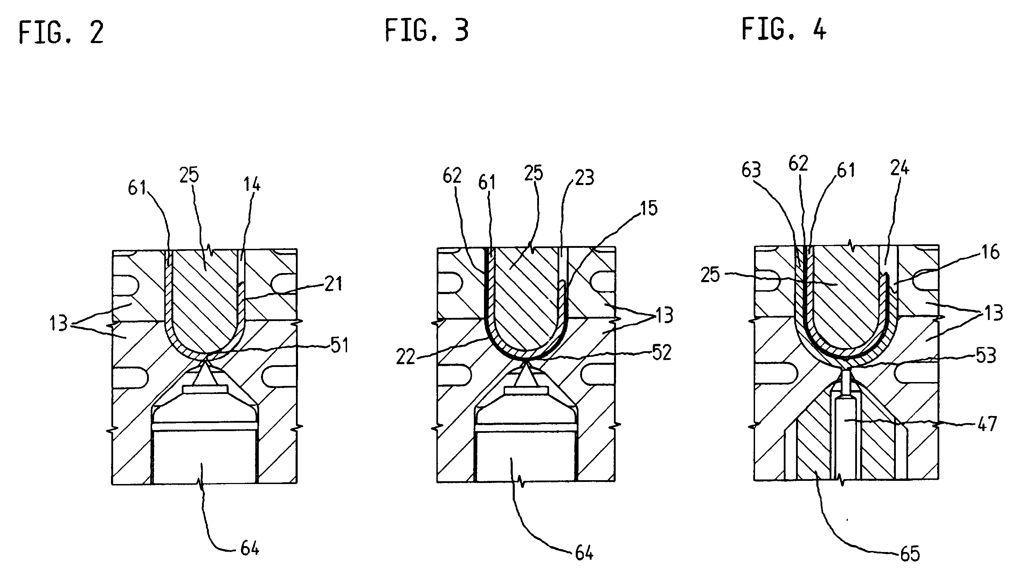

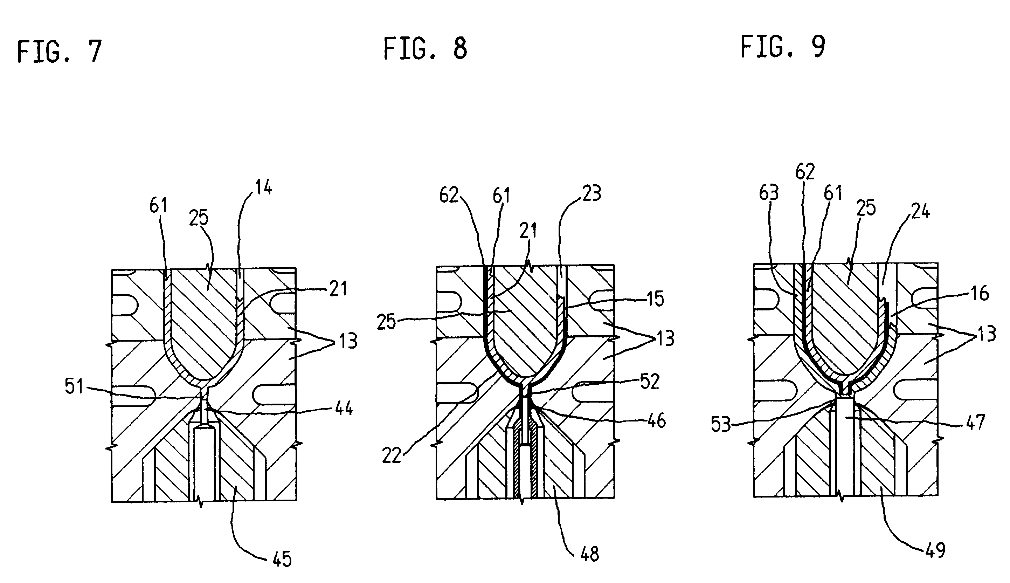

Der Kunststoffartikel 10 besitzt ferner ein unteres geschlossenes Ende 10b, das im verstreckten Kunststoffhohlkörper den Boden mit der Wandstärke x bildet. Dieses untere Ende 10b ist über dem Zwischenbereich 10f mit dem oberen Ende 10d verbunden. Im Bereich des unteren Endes liegen mehrere Angüsse für die verschiedenen Werkstoffe. Innerhalb seiner Wandstärke x ist das untere Ende 10b amorph, so daß die Angüsse ohne Einfluß auf den Kunststoffartikel bei dessen Verstrecken sind. Durch eine entsprechende Geometriewahl der Formhohlräume werden sämtliche Angüsse 51,52,53 so hergestellt, daß entweder bei Herstellung ohne Verschlußnadel (Fig. 2-4) kein kristalliner Bereich entsteht oder die Bereiche kristallinen Materials außerhalb der Wandstärke x liegen (Fig. 7-9).

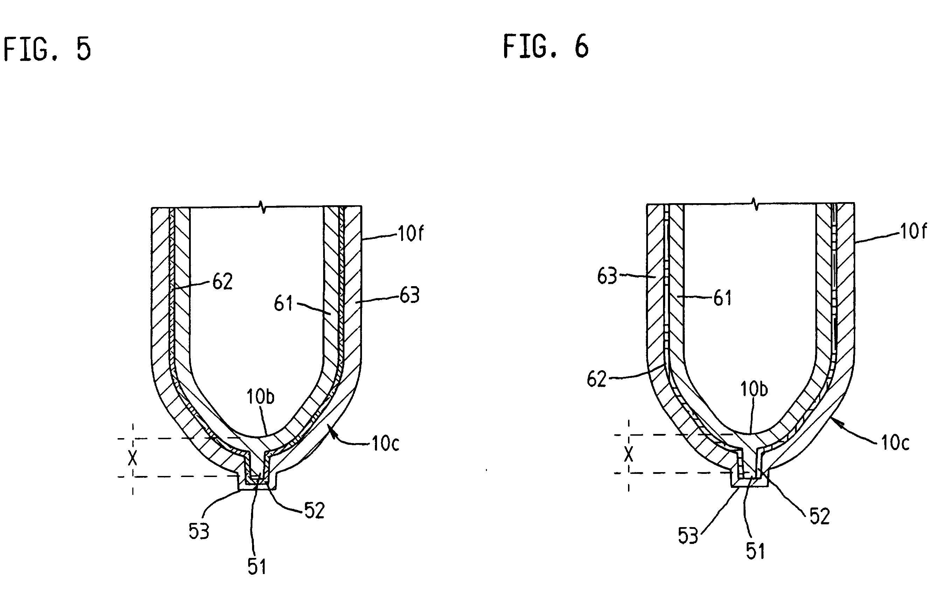

Durch Einspritzen mit offener Verschlußdüse oder ohne Verschlußnadel kann der Angußbereich amorph gehalten werden, da dieser Bereich schneller abkühlt, wobei zugleich der Anguß schmäler wird. Es kann allerdings auch gemäß Fig. 5 durch eine entsprechende Geometriewahl des Formhohlraumes ein langer Anguß 51 erzeugt werden. Beim Einspritzen der folgenden Werkstoffe im Ausführungsbeispiel zur Erzeugung der Schichten 62 und 63 wird dieser lange Anguß gemäß der Geometrie der folgenden Formhohlräume von den Angüssen 52 und 53 überspritzt. Es ist gemäß Fig. 6 nicht zwingend erforderlich, daß die Barriereschicht über dem Anguß 51 der vorausgegangenen Schichten geführt wird. Dies ist insbesondere dann von Bedeutung, wenn der gesamte Angußpunkt nicht größer sein soll als bisher im Stand der Technik üblich.

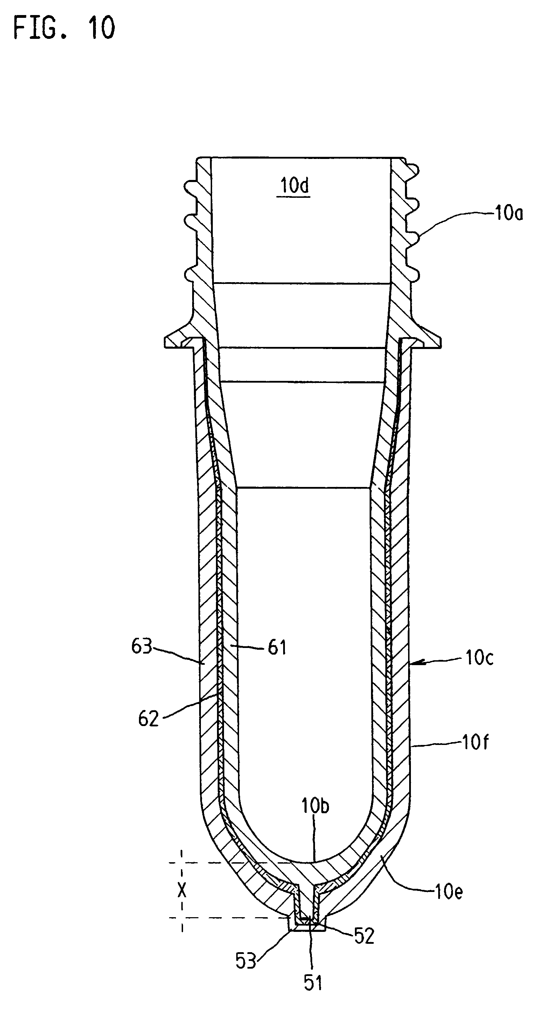

Die exakte Formgeometrie erlaubt auch die Herstellung eines Kunststoffartikels gemäß Fig. 10 bei der der Bodenbereich der Flasche verstärkt ist. Dazu kann im Kunststoffartikel Material im Bodenbereich 10b angehäuft werden. Durch die Verstärkung der Wandstärken in diesem Bereich werden die Fließwiderstände beim Einspritzen des Materials in den Formhohlraum geringer. Um Fließwege und Fließwiderstände zu minimieren, kann der gesamte Bodenbereich so ausgestaltet werden, daß die Stärke der Schichten 61,62,63 sich ausgehend vom jeweiligen Anguß 51,52,53 bis zum Übergang zum Zwischenbereich 10f zunehmend verjüngt. Dies hat den Vorteil, daß dort, wo beim Verstrecken mehr Material aufgrund der halbkreisförmigen Form benötigt wird, auch mehr Material vorhanden ist als in den geradlinigen Bereichen des Zwischenbereichs 10f.

Die Figuren 2 bis 4 und 7 bis 9 zeigen schematisch ein Verfahren zur Herstellung eines derartigen, aus mehreren Werkstoffen bestehenden, hohlen Kunststoffartikels 10. Dargestellt ist eine Form 13 mit einem Kern oder Domeinsatz 25. Zwischen Form 13 und Dorneinsatz 25 werden Formhohlräume gebildet, die über die Spritzdüsen 64,65 bzw. 45,48 und 49 mit plastifiziertern Material befüllt werden. Das Verfahren erfolgt so, daß ein plastifizierter erster Werkstoff in den ersten Formhohlraum 14 der Fig. 2 bzw. 7 eingespritzt wird. Dieser Formhohlraum bestimmt den Anteil des ersten Werkstoffs an der Gesamtform des hohlen Kunststoffartikels 10. Gebildet wird dabei ein Zwischenformling 21. Dieser Zwischenformling wird mit dem Domeinsatz 25 gemeinsam in den weiteren Hohlraum 23 verbracht, wobei sich der Zwischenformling 21 auf dem Domeinsatz 25 befindet. Dadurch wird im Hohlraum 23 der weitere Formhohlraum 15 gebildet. Nach Einspritzen des zweiten Werkstoffs entsteht ein weiterer Formling 22, der anschließend mit Domeinsatz 25 in den Hohlraum 24 der Fig. 4 oder 9 eingesetzt werden kann und dort den weiteren Formhohlraum 16 bildet. In diesem Formhohlraum 16 kann ein dritter Werkstoff eingespritzt werden. Diese Schrille können bedarfsweise zum Aufbau weiterer Schichten wiederholt werden, bis bei der Herstellung des endgültigen Kunststoffartikels 10 der letzte Werkstoff eingespritzt wird.

Basierend auf diesem Grundprinzip, das auch in der älteren Patentanmeldung 198 56 356.6 erläutert wurde und auf das hiermit weiterhin verwiesen wird, wird gemäß Fig. 2-4 wenigstens einer der ersten Werkstoffe zur Bildung der ersten Teile des Kunststoffartikels ohne Nadelverschluß der Spritzdüse eingespritzt. Im Ausführungsbeispiel (Fig. 2,3) werden die Schichten 61, 62 beide ohne Verschlußnadel mit offener Düse 64 eingespritzt. Der Anguß kann dadurch sehr klein und weitestgehend amorph hergestellt werden. Die weiteren Einspritzvorgänge können dann gemäß Fig.4 mit einer Spritzdüse 65 mit Verschlußnadel 47 gefahren werden. Es besteht aber auch die Möglichkeit, die folgenden Einspritzvorgänge ebenfalls mit offener Düse vorzunehmen.

Alternativ kann der Angußzapfen auch gemäß Fig. 7 so lange ausgebildet werden, daß der kristalline Bereich aus der Wandstärke x des unteren Endes 10b herausgelangt. Damit liegt auch der kristalline Bereich des Barrierematerials außerhalb dieser Wandstärke x. In Fig. 8 wird der durch die Überlagerung der Angüsse gebildete Angußzapfen so klein wie möglich gehalten. Wie dies werkzeugtechnisch verwirklicht wird, zeigt Fig. 8. Bei der Einbringung der eingespritzten zweiten Schicht 62 des Barrierematerials, legt sich eine Verschlußnadel 46 an den Anguß 51 des zuvor hergestellten Teils (Schicht 61). Dadurch wird ein formschlüssiges Abdichten erzielt, wobei eventuell die Verschlußnadel abgefedert werden kann. Die Verschlußnadel selbst ist von einer Hülse umgeben, welche die eigentliche Anspritzöffnung zum Einspritzen der folgenden Schicht 62 bzw. des folgenden Werkstoffes darstellt. Nachdem damit die Barriereschicht über die Spritzdüse 48 eingespritzt wurde, kann dann gemäß Fig. 9, wie im Stand der Technik bekannt, mit einer weiteren Verschlußdüse 49 mit Verschlußnadel 47 die dritte Schicht 63 hergestellt werden. Es versteht sich von selbst, daß durch dieses Verfahren auch Kunststoffartikel mit weiteren Schichten hergestellt werden können.

### Liste der Bezugszeichen (kein Bestandteil der Anmeldeunterlagen)

- 10: Kunststoffartikel
- 10a: Gewindebereich
- 10b: unteres Ende
- 10d: offenes Ende
- 10e: verjüngender Bereich
- 10f: Zwischenbereich
- 10g: Ausnehmung
- 10h: Neckring
- 13: Form
- 14,15,16: Formhohlraum
- 21: Zwischenformling
- 22: weiterer Formling
- 23,24: weiterer Hohlraum
- 25: Domeinsatz
- 44,46,47: Verschlußnadel
- 45,48,49,:
- 64,65: Spritzdüse
- 51,52,53: Angüsse
- 61,62,63: Schicht
- x: Wandstärke von 10b

## Patentansprüche

1. Aus mehreren Werkstoffen bestehender hohler Kunststoffartikel (10) zur Herstellung von Kunststoffhohlkörpern durch Verstrecken mit
- einer Wandung (10c), in der die Werkstoffe über ihre Kontaktfläche miteinander verbunden sind,
- einem oberen offenen Ende (10d),
- einem unteren geschlossenen Ende (10b) mit einer Wandstärke (x),
- einem oberes und unteres Ende verbindenden Zwischenbereich (10f),
- mehreren Angüssen (51,52,53) für die verschiedenen Werkstoffe, die im Bereich des unteren Endes (10b) zu liegen kommen,
dadurch gekennzeichnet, daß das untere Ende (10b) trotz der Angüsse innerhalb der Wandstärke (x) amorph ist.

2. Kunststoffartikel nach Anspruch 1, dadurch gekennzeichnet, daß der Anguß (51, 52, 53) aller Werkstoffe außerhalb der Wandstärke (x) angeordnet ist.

3. Kunststoffartikel nach Anspruch 1 oder 2, dadurch gekennzeichnet, daß der Kunststoffartikel (10) wenigstens drei Schichten (61, 62, 63) aufweist, von denen eine der mittleren Schichten (62) eine Barriereschicht ist, und daß die Barriereschicht den Angußzapfen des Anguß (51) zumindest einer der ersten Schichten (61) nicht überdeckt.

4. Kunststoffartikel nach einem der Ansprüche 1-3, dadurch gekennzeichnet, daß sich die Stärke der Schichten (61, 62, 63) und damit vorzugsweise der Wandung (10c) ausgehend vom jeweiligen Anguß (51, 52, 53) bis zum Übergang zum Zwischenbereich (10f) zunehmend verjüngt.

5. Verfahren zur Herstellung eines aus mehreren Werkstoffen bestehenden hohlen Kunststoffartikels (10) nach einem der Ansprüche 1 bis 4, gekennzeichnet durch mehrere Spritzgießvorgänge in Formhohlräume (14, 15, 16) mit den Schritten:
a) Einspritzen eines plastifizierten ersten Werkstoffes in einen ersten Formhohlraum (14), der dem Anteil des ersten Werkstoffs an der Gesamtform des hohlen Kunststoffartikels (10) entspricht zur Formung eines Zwischenformlings (21) unter Bildung eines ersten Teils des Kunststoffartikels (10),
b) Zusammenbringen des Zwischenformlings (21) mit wenigstens einem weiteren Hohlraum (23) zur Bildung eines weiteren Formhohlraums (15), der teilweise durch den Zwischenformling (21) begrenzt ist und dem Teil eines weiteren Werkstoffes an der Gesamtform des Kunststoffartikels (10) entspricht,
c) Einspritzen wenigstens eines plastifizierten weiteren Werkstoffes in den weiteren Formhohlraum (15) zur Formung eines weiteren Formlings (22) unter Bildung eines Teils des Kunststoffartikels (10),
d) bedarfsweise Wiederholen der vorausgegangenen Schritte b) und c) unter Verwendung des weiteren Formlings (22) als Zwischenformling (21) bis zur Herstellung des gesamten Kunststoffartikels (10),
e) wobei wenigstens einer der ersten Teile ohne Nadelverschluß der Spritzdüse (45) eingespritzt wird, so daß das untere Ende (10b) innerhalb seiner Wandstärke (x) amorph ist.

6. Verfahren nach Anspruch 5, dadurch gekennzeichnet, daß der Formhohlraum (14) des ersten Teils so aufgebaut ist, daß sich ein langer Angußzapfen des Anguß (51) ergibt.

7. Verfahren nach einem der Ansprüche 5 oder 6, dadurch gekennzeichnet, daß der oder die ersten Teile (Schicht 61,62) ohne Nadelverschluß der Spritzdüse eingespritzt wird.

8. Verfahren nach einem der Ansprüche 5-7, dadurch gekennzeichnet, daß alle Teile (Schicht 61, 62, 63) mit offener Spritzdüse (45) eingespritzt werden.

9. Verfahren zur Herstellung eines aus mehreren Werkstoffen bestehenden hohlen Kunststoffartikels (10) nach einem der Ansprüche 1 bis 4, gekennzeichnet durch mehrere Spritzgießvorgänge in Formhohlräume (14, 15, 16) mit den Schritten:
a) Einspritzen eines plastifizierten ersten Werkstoffes in einen ersten Formhohlraum (14), der dem Anteil des ersten Werkstoffs an der Gesamtform des hohlen Kunststoffartikels (10) entspricht zur Formung eines Zwischenformlings (21) unter Bildung eines ersten Teils des Kunststoffartikels (10),
b) Zusammenbringen des Zwischenformlings (21) mit wenigstens einem weiteren Hohlraum (23) zur Bildung eines weiteren Formhohlraums (15), der teilweise durch den Zwischenformling (21) begrenzt ist und dem Teil eines weiteren Werkstoffes an der Gesamtform des Kunststoffartikels (10) entspricht,
c) Einspritzen wenigstens eines plastifizierten weiteren Werkstoffes in den weiteren Formhohlraum (15) zur Formung eines weiteren Formlings (22) unter Bildung eines Teils des Kunststoffartikels (10),
d) bedarfsweise Wiederholen der vorausgegangenen Schritte b) und c) unter Verwendung des weiteren Formlings (22) als Zwischenformling (21) bis zur Herstellung des gesamten Kunststoffartikels (10),
e) wobei der Formhohlraum (14) des ersten Teils so aufgebaut ist, daß sich ein langer Angußzapfen des Anguß (51) ergibt, so dass ein Bereich kristallinen Materials des Anguß (51) außerhalb der Wandstärke (x) des unteren Endes (10b) angeordnet ist, wobei das Einspritzen wenigstens eines der ersten Teile des Kunststoffartikels (10) unter Einsatz einer Verschlußnadel (44) in der Spritzdüse (55) erfolgt.

10. Verfahren nach Anspruch 9, dadurch gekennzeichnet, daß der folgende Teil eine Barriereschicht (Schicht 62) bildet, wobei beim Einspritzen des hierfür erforderlichen Werkstoffes die Verschlußnadel (46) den Anguß (51) der vorausgegangenen Teile des Kunststoffartikels (10) formschlüssig abdichtet, während der Anguß (52) der Barriereschicht um die Düsennadel (46) herum erfolgt.

11. Verfahren nach Anspruch 10, dadurch gekennzeichnet, daß der Anguß (53) der letzten Schicht (63) unter Einsatz einer Verschlußnadel (47) erfolgt.
